# EUROPEAN PATENT APPLICATION

(11) **EP 1 698 236 A1**
(43) Date of publication of application: **06.09.2006**
(21) Application number: 04807427.2
(22) Date of filing: 21.12.2004
(51) Int. Cl.: A23L 1/10, A23L 1/172, A23L 1/30, A23L 1/22

(54) **FOOD CONTAINING WHEAT GERM OBTAINED FROM WHEAT SEED AND PROCESS FOR PRODUCING THE SAME**

(30) Priority: 25.12.2003 JP 2003430583
(71) Applicant: Sapporo Breweries Limited, Tokyo 150-8522 (JP)
(72) Inventor: OKADA, Yoshihiro, c/o SAPPORO BREWERIES LIMITED, Nitta-gun, Gunma 370-0393 (JP); KIHARA, Makoto, c/o SAPPORO BREWERIES LIMITED, Nitta-gun, Gunma 370-0393 (JP); ITO, Kazutoshi, c/o SAPPORO BREWERIES LIMITED, Nitta-gun, Gunma 370-0393 (JP)
(74) Representative: Billington, Lawrence Emlyn
(86) International application number: PCT/JP2004/019070
(87) International publication number: WO 2005/063045

(57) **Abstract**

A processing method is disclosed that provides food or food products which include high oligosaccharide contents by using malt of one or more of wheat, barley, oats and rye as a part of materials for the food or food products.

It is possible to provide food or food products which include a high oligosaccharide like high functional oligosaccharide such as maltotriose, maltotetraose, maltopentaose and maltohexaose contents, not by adding the oligosaccharide itself but by using malt obtained by a germination step, in which step seed of one or more of wheat, barley, oats and rye as a part of materials for food or food products are soaked in water or hot water for a predetermined time.

## Description

### BACKGROUND OF THE INVENTION

### 1. Field of the Invention

This invention generally relates to food or food products including malt which are manufactured with germinated seeds of one or more of wheat, barley, oats and rye. In more detail, this invention relates to food or food products which include high oligosaccharide contents, not by adding the oligosaccharide but by using malt obtained by a germination step, in which step seed of one or more of wheat, barley, oats and rye as a part of materials for food or food products are soaked in water or hot water for a predetermined time.

### 2. Description of the Related Art

Conventionally, functional food products which are added as various ingredients in food have been selling in the marketplace. Recently and continuing, healthy intentions of consumers are increasing, and food or beverages which have added amino acids and dietary fibers as functional ingredients have been under development. For example, gamma-aminobutyric acid, one of free amino acids called GABA, is used. It is known that GABA acts as a neurotransmitter of a restraint system in the human body. In addition, it is known that GABA acts in depressing blood pressure, stabilizing the mind of human beings, improving kidney and liver functions, and promoting alcohol metabolism. Therefore, recently, functional food products including GABA are among the most attractive functional ingredients.

Dietary fibers such as β-glucan have various functions like operations to keep the bowels well-conditioned and restraint operations against high sugar levels in blood. So, water products including dietary fibers are manufactured.

Also, recently, oligosaccharide is one of important functional ingredients in the field of the food industry, and conventionally, various research efforts have been performed.

Various characteristics are reported about starch sugar or oligosaccharide provided by enzymatic decomposition of starch, and generally, as water retentiveness rises, the anti-crystallization effect is increased (see Non-patent document 1).

For example, compared to sugar, maltotetraose is superior in maintaining moisture and solubility, and is able to reduce degradation of starch. Also, because maltotetraose has superior characteristics for digestion and water-absorbing, it is used as sugar supplying energy for various sports drink and soft drinks as nutrition thereby attracting attention as sugar having functionality (see Non-patent document 2).

Accordingly, it is expected that food including oligosaccharide have superior characteristics, but in conventional technology, in order to manufacture soft drinks or food including oligosaccharide, a method is used in which mainly oligosaccharide itself is added to soft drinks or foods as food additives.

### SUMMARY OF THE INVENTION

It is a general object of the present invention to provide food or food products which include high oligosaccharide contents, not by adding the oligosaccharide but by using malt obtained by a germination step, in which step seed of one or more of wheat, barley, oats and rye as a part of materials for food or food products are soaked in water or hot water for a predetermined time.

In order to achieve the above-mentioned object, as described in claim 1, there is provided a method of processing food or food products,
characterized in that after seed of one or more of wheat, barley, oats and rye are soaked in water or hot water for a predetermined time, malt obtained by a germination step as supplier for oligosaccharide is included in the food or food products as a part of materials thereof.

According to claim 1, after seed of one or more of wheat, barley, oats and rye are soaked in water or hot water for a predetermined time, by including malt obtained by a germination step as supplier for oligosaccharide in the food or food products as a part of materials thereof, it is possible to provide a method of processing food or food products which include high oligosaccharide contents without adding the oligosaccharide itself; as a result, food or food products which include high oligosaccharide contents can be provided.

Additionally, as described in claim 2, in the method of processing food or food products as claimed in claim 1, the oligosaccharide content in malt is adjusted by controlling a mixing ratio of the malt.

According to claim 2, by controlling the mixing ratio of the malt, it is possible to provide a method of processing food or food products which adjusts oligosaccharide contents in malt without adding the oligosaccharide itself; as a result, food or food products which include high oligosaccharide contents can be provided.

Additionally, as described in claim 3, in the method of processing food or food products as claimed in claim 2, the oligosaccharide is one or more selected from a group comprising maltotriose, maltotetraose, maltopentaose and maltohexaose.

According to claim 3, without adding oligosaccharide itself, it is possible to provide a method of processing food or food products which include high maltotriose, maltotetraose, maltopentaose and maltohexaose contents in malt; as a result, food or food products which include high oligosaccharide contents can be provided.

In order to achieve the above-mentioned object, as described in claim 4, there is provided food or food products with the methods as claimed any one of claims 1-3.

According to claim 4, by using the method as claimed any one of claims 1-3, it is possible to provide food or food products which include high oligosaccharide contents that can be provided without adding oligosaccharide itself.

According the present invention, it is possible to provide food or food products which include high oligosaccharide contents without adding the oligosaccharide itself but by using malt obtained by a germination step, in which step seed of one or more of wheat, barley, oats and rye as a part of materials for food or food products are soaked in water or hot water for a predetermined time.

Other objects, features and advantages of the present invention will become more apparent from the following detailed description.

### BRIEF DESCRIPTION OF THE DRAWINGS

Fig. 1 is a graph showing composition of sugars of bread flour and malt flour; and
Fig. 2 is a graph showing a change of composition of sugar during the bread manufacturing process.

### DESCRIPTION OF THE PREFERRED EMBODIMENTS

A description will now be given, with reference to the embodiments according to the present invention.

According to inventors of the present invention, it is recognized and reported that GABA and other free amino acids oligosaccharide contents in foods are increased by using malt, for example barley malt obtained by a germination step, in which step seed of one or more of wheat, barley, oats and rye as a part of materials for food or food products are soaked in water or hot water for a predetermined time. Here, by using malt as a part of food materials, experiments were performed, in which experiments how composition of the sugar of foods is influenced was examined.

First, each composition of sugar in bread flour and malt flour was measured. Malt was manufactured through the manufacturing step (hereinafter, called soaking, germination, and roast-dry processes) of the barley malt as material for beer and low-malt beer.

In general, soaking, germination, and roast-dry processes comprise a soaking process, a germination process, and a roast-dry process. In detail, barley is soaked in water or hot water and water is absorbed (soaking process); next, the soaked barley is germinated (germination); and after allowing biosynthesis of an enzyme and decomposition of a part of a storage substance during the above process, the resulting products are heat-dried (roasted-dry) to allow for producing malt. Also, according to the research of the inventors, since the roasted-dry process is a kind of dry process, it was recognized that functional ingredients like free amino acids and dietary fibers contents are changed. Thus, there is a possibility of changing the oligosaccharide content, and it might be processed to change the oligosaccharide content in malt not with heat-drying but with freeze-drying. Next, malt was crushed into malt flour, and the composition of sugar was measured compared to bread flour. As a result, it was recognized that there was no difference between samples of maltose content, but detected other sugar contents were more prevalent in malt flour. On the other hand, oligosaccharides other than maltotetraose could not be detected in any samples.

Moreover, malt flour was mixed with bread flour, and food was manufactured. Then, a change of composition of sugar during the manufacturing process was measured. Comparing composition of sugars in roll-breads manufactured with various mixing ratios, specific oligosaccharides such as maltotriose were increased depending on the mixing ratio, and oligosaccharides like maltotetraose, maltopentaose and maltohexaose, which were not detected in materials and dough right after fermentation, were drastically increased after the baking step.

As a result of the above, during the manufacturing process of food which is mixing barley malt with the food materials, it was recognized that oligosaccharides which are not included in materials are produced, and as the mixing ratio is increased more, these oligosaccharides are produced more.

Therefore, according to an embodiment of the present invention, oligosaccharide content in food can be increased by using malt obtained through the germination of seeds of one or more of wheat, barley, oats and rye like barley malt as material.

Below, embodiments of the present invention will be described in more detail.

### First Embodiment

Composition of each sugar for bread flour and malt flour

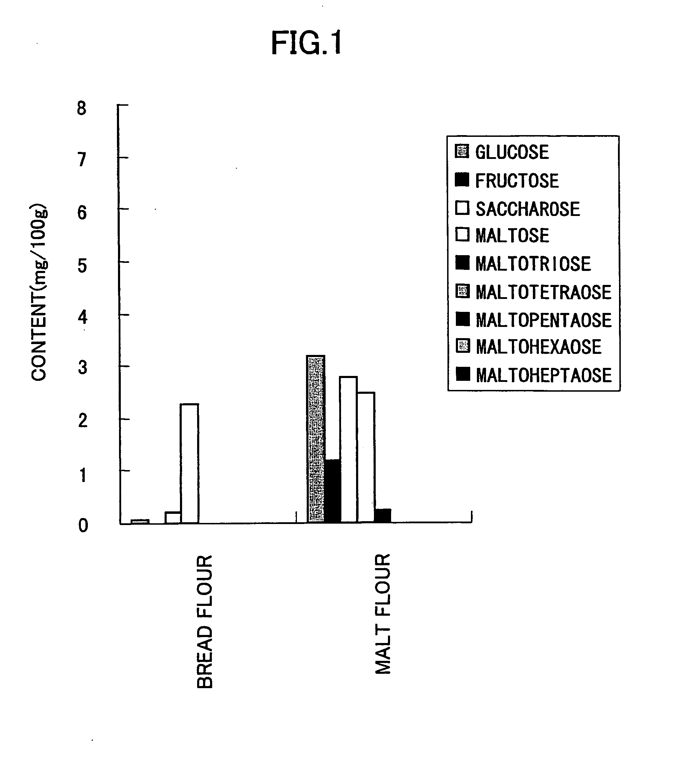

Compositions of sugar for bread flour and malt flour were measured. Malt (Haruna Nijo) as material for malt flour was manufactured by soaking, germination and roast-dry processes of pilot samples in accordance with standard methods of The Sapporo Breweries Ltd.. Malt of germination the 6^{th} day during the germination process was crushed into powder and malt flour was manufactured. The powdered samples of 20 mg/800 *µ*l distilled water were shaken overnight at 5 °C, then composition of sugar was measured with an analyzer for composition of sugar (DIONEX). According to figure 1, there was no difference between samples for maltose content, but detected other sugar contents were more prevalent in the malt flour. Also, oligosaccharides which have high molecular weight other than maltotetraose could not be detected in any samples.

### Second embodiment

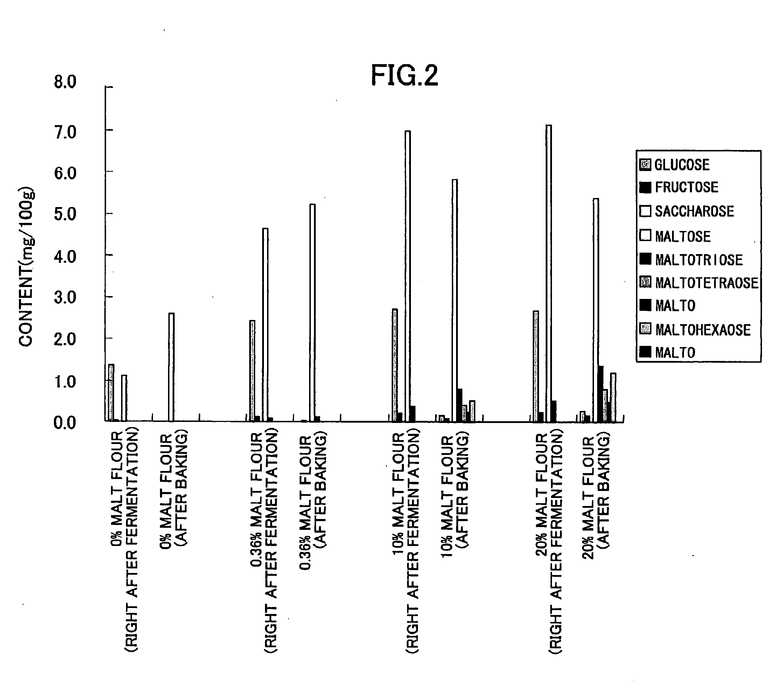

Roll breads were manufactured by mixing 0%, 0.36%, 10% and 20% of the malt flour as in the first embodiment with bread flour. Conventionally, the most popular mixing ratio of malt flour is 0.36% during the bread manufacturing (Briggs, Malts and Malting, 1998, p.9). Bread was manufactured with these materials, and a change of composition of sugar during the bread manufacturing process was measured. Figure 2 shows a change of composition of sugar during the bread manufacturing process.

Compared to 0% malt flour, it was recognized that maltose content increased in each bread (after baking) for 0.36%, 10% and 20% malt flour, but there was no big change depending the mixing ratio of malt flour. On the other hand, maltotriose in bread was increased depending on the mixing ratio of malt flour. Also, maltotetraose, maltopentaose and maltohexaose were not detected in materials and dough right after fermentation, but for 10% and 20% malt flour, which mixing ratios of malt flour are much bigger than 0.36%, maltotetraose, maltopentaose and maltohexaose were drastically increased in bread after the baking step.

According to the above result, it is recognized that oligosaccharide content in food is increased by using malt flour with a high mixing ratio compared to the conventional method.

The present invention is not limited to the specifically disclosed embodiments, and variations and modifications may be made without departing from the scope of the present invention.

The present application is based on Japanese priority application No.2003-430583 filed on December 25, 2003, the entire contents of which are hereby incorporated by reference.

## Claims

1. A method of processing a food or food products,
**characterized in that** after seed of one or more of wheat, barley, oats and rye are soaked in water or hot water for a predetermined time, malt obtained by a germination step as supplier for oligosaccharide is included in the food or food products as a part of materials thereof.

2. The method of processing the food or food products as claimed in claim 1,
wherein the oligosaccharide content in malt is adjusted by controlling a mixing ratio of the malt.

3. The method of processing the food or food products as claimed in claim 2,
wherein the oligosaccharide is one or more selected from a group comprising maltotriose, maltotetraose, maltopentaose and maltohexaose.

4. A food or food products produced with the method as claimed in any one of claims 1-3.
